# EUROPÄISCHE PATENTSCHRIFT

(11) **EP 2 739 513 B1**
(45) Veröffentlichungstag und Bekanntmachung des Hinweises auf die Patenterteilung: **13.12.2017**
(21) Anmeldenummer: 12740987.8
(22) Anmeldetag: 31.07.2012
(51) Int. Cl.: B60T 7/04, B60T 8/17, B60T 8/172, B60T 8/1755, B60T 8/32, B60T 8/36, B60T 8/40, B60T 8/48, B60T 13/68, B60T 17/04, B60T 17/22, B60T 8/44

(54) **VERFAHREN ZUR OPTIMIERUNG DER DRUCKSTELLGENAUIGKEIT**
METHOD FOR OPTIMIZING THE PRESSURE SETTING ACCURACY
PROCÉDÉ D'OPTIMISATION DE LA PRÉCISION DE RÉGLAGE DE LA PRESSION

(30) Priorität: 01.08.2011 DE 102011080227
(43) Veröffentlichungstag der Anmeldung: 11.06.2014
(73) Patentinhaber: Continental Teves AG & Co. oHG, 60488 Frankfurt (DE)
(72) Erfinder: LESKA, Peter, 63303 Dreieich (DE); KOLLMANN, Holger, 63533 Mainhausen (DE); GRONAU, Ralph, 35083 Wetter (DE); WAGNER, Michel, 64289 Darmstadt (DE); BERNTHEUSEL, Jörg, 61267 Neu Anspach (DE); HÄNDLER, Erik, 68623 Lampertheim (DE); FÄRBER, Silvio, 65719 Hofheim (DE); HENKE, Patrik, 60311 Frankfurt am Main (DE); TREIB, Alexander, 60439 Heddernheim (DE); NEU, Andreas, 76773 Kuhardt (DE)
(74) Vertreter: Hoffmann, Tim Hendrik
(86) Internationale Anmeldenummer: PCT/EP2012/064965
(87) Internationale Veröffentlichungsnummer: WO 2013/017598

(56) Entgegenhaltungen:
- WO-A1-2005/054028
- DE-A1- 10 227 785
- DE-A1-102005 014 097
- DE-A1-102007 019 732
- DE-A1-102007 019 929
- DE-A1-102007 023 320
- DE-A1-102008 006 653
- DE-A1-102008 013 043
- DE-A1-102008 042 737
- DE-A1-102008 042 771
- US-A1- 2003 218 380

## Beschreibung

Die Erfindung betrifft ein Verfahren zur Optimierung der Druckstellgenauigkeit gemäß Oberbegriff von Anspruch 1, dessen Verwendung sowie eine hydraulische oder elektrohydraulische Fahrzeugbremsanlage gemäß Oberbegriff von Anspruch 13.

Die möglichst exakte Steuerung und Regelung von analogisierten Digitalventilen in modernen Fahrzeugbremssystemen mit hydraulischer Druckregelung stellt eine zunehmend wichtige Voraussetzung für eine Vielzahl unterschiedlicher Regelfunktionen und Komfortfunktionen, wie z.B. die an zunehmender Verbreitung gewinnenden Abstands- und Geschwindigkeitsregelsysteme, dar. Durch die Verwendung von Drucksensoren in jedem einzelnen der Radbremszylinder ist jederzeit eine exakte Druckmessung und damit einhergehend ein exaktes Einregeln des notwendigen Bremsdrucks möglich. Dies führt allerdings zu hohem Kostenaufwand für die zusätzlichen Drucksensoren und damit verbunden zu höheren Gesamtkosten des Bremssystems, was sich wiederum ungünstig auf die kommerzielle Wettbewerbsfähigkeit derartiger Systeme auswirkt.

Eine im Stand der Technik bekannte Möglichkeit zur Umgehung zusätzlicher Drucksensoren und damit einhergehender, zusätzlicher Kosten kann durch Ausmessen des Öffnungs- bzw. Schließstroms in Form einer Kennlinie, welche eine am Ventil anliegende Druckdifferenz mit einem Erregerstrom korreliert, erzielt werden. Dies erlaubt auch ohne zusätzliche Drucksensoren eine im Wesentlichen exakte Regelung eines analogisierten Hydraulikventils. Ein derartiges Verfahren ist etwa in der DE 102 24 059 A1 offenbart. Die Kennlinie wird hier elektronisch im Regelsystem hinterlegt und über den Erregerstrom kann anschließend gezielt eine Druckdifferenz eingestellt werden, ohne auf tatsächlich gemessene Druckdaten zurückgreifen zu müssen.

Die DE 10 2005 051 436 A1 schlägt ebenfalls ein Verfahren zur Druckregelung in einem hydraulischen Bremssystem ohne die Verwendung zusätzlicher Drucksensoren vor. Hierbei werden die analog regelnden Hydraulikventile mittels der im Fahrzeug vorhandenen ABS-Raddrehzahlsensoren kalibriert, welche eine Drehzahlreduzierung und somit eine Bremswirkung in Abhängigkeit des Erregerstroms ermitteln. Dieses Verfahren erlaubt eine Ventilkalibrierung ohne die Verwendung zusätzlicher Messsensoren direkt im Fahrzeug selbst. Die derart bestimmte Ansteuerkennlinie wird elektronisch abgespeichert und zur Druckregelung verwendet.

In der DE 10 2008 060 622 A1 wird eine hydraulische Kraftradbremsanlage offenbart, welche eine kontinuierlich fördernde Druckmittelpumpe umfasst. Eine bestimmte Druckanforderung kann mittels einer Überströmregelung des Trennventils oder des Auslassventils eingeregelt werden. Da die Druckeinregelung hierbei wesentlich vom Überströmverhalten der regelnden Ventile abhängt und die Ansteuerkennlinie alleine keinen Aufschluss über den Strömungsdurchfluss eines Ventils gibt, werden zusätzliche Drucksensoren im Bereich der Radbremsen verwendet.

Aus der DE 10 2007 019 929 A1 ist ein Korrekturverfahren bekannt, bei dem während einer Blockierschutzregelung eine vorgegebene Ansteuerkennlinie eines Ventils durch ein Lernverfahren korrigiert wird, wobei ein aktueller Druckmodellwert mit einem Modelldruckniveau verglichen wird.
Der Nachteil der aus dem Stand der Technik bekannten Verfahren zur Kalibrierung und anschließenden Druckregelung ohne zusätzliche Drucksensoren besteht darin, dass die Druckregelung nur unter Berücksichtigung einer einzigen Ventileigenschaft, nämlich der Ansteuerkennlinie, durchgeführt wird. Das tatsächliche Strömungsdurchfluss- bzw. Überströmverhalten und die damit verbundene Druckänderungsgeschwindigkeit werden hingegen nicht berücksichtigt. Sofern das Überströmverhalten von besonderer Bedeutung ist, werden die erforderlichen Regelinformationen im Stand der Technik mittels zusätzlicher Drucksensoren erlangt. Hinzu kommt, dass jedes Ventil - ebenso wie die für den Druckaufbau verwendeten Pumpen und Pumpenmotoren - herstellungsbedingt gewissen Fertigungstoleranzen unterliegt auch eine Kalibrierung dieser Vorrichtungen nur mit einer begrenzten Genauigkeit möglich ist. In einem ungünstigen Fall kommt es nun zu einer einseitigen Aufsummierung der unterschiedlichen Toleranzen der an der Druckregelung beteiligten Vorrichtungen, wodurch bei einer Druckeinsteuerung starke und langanhaltende Druckstellungenauigkeiten im System entstehen können. Dies führt zu vom Fahrer akustisch und haptisch wahrnehmbaren Regelschwingungen, die oftmals für Fahrzeugfehlfunktionen gehalten werden.

Die Aufgabe der vorliegenden Erfindung ist es, ein Verfahren vorzuschlagen, welches unter Berücksichtigung mindestens einer weiteren Ventilcharakteristik neben der Ansteuerkennlinie und ohne den Einsatz von zusätzlichen Drucksensoren eine im Wesentlichen exakte Druckeinregelung erlaubt und dabei Druckstellungenauigkeiten um den Druckeinsteuerpunkt vermeidet.

Diese Aufgabe wird erfindungsgemäß durch das Verfahren zur Optimierung der Druckstellgenauigkeit gemäß Anspruch 1, und die hydraulische oder elektrohydraulische Fahrzeugbremsanlage gemäß Anspruch 13 gelöst.

Bei dem erfindungsgemäßen Druckstellverfahren zur Vermeidung von Druckpulsationen wird mittels einer Hydraulikpumpe ein hydraulischer Druck entsprechend einer Druckanforderung aufgebaut und unter Verwendung eines analog regelnden Hydraulikventils und einer bekannten Ansteuerkennlinie des analog regelnden Hydraulikventils wird eine Überströmregelung durchgeführt. Die Überströmregelung wirkt dabei den von der Hydraulikpumpe erzeugten Druckpulsationen entgegen. Das erfindungsgemäße Druckstellverfahren zeichnet sich dadurch aus, dass zusätzlich zu der bekannten Ansteuerkennlinie des analog regelnden Hydraulikventils mindestens eine weitere Ventilcharakteristik zur Überströmregelung berücksichtigt wird. Da die Ansteuerkennlinie ausschließlich den einer vorherrschenden Druckdifferenz zugeordneten Öffnungspunkt bzw. Schließpunkt des analog regelnden Hydraulikventils angibt, ist durch alleinige Berücksichtigung der Ansteuerkennlinie keine genaue Kontrolle des Hydraulikfluidvolumenstroms möglich, da jedes Ventil aufgrund von Fertigungstoleranzen individuelle Durchflusseigenschaften besitzt. Die Durchflusseigenschaften beeinflussen allerdings maßgeblich die Druckaufbau- und Druckabbaugeschwindigkeiten des hydraulischen Systems, deren Kenntnis für eine genaue Druckregelung von großer Bedeutung ist. Die zusätzliche Berücksichtigung von über die Ansteuerkennlinie hinausgehenden Ventilcharakteristiken erlaubt somit eine verbesserte und genauere Druckregelung.

Bevorzugt ist es vorgesehen, dass die mindestens eine weitere Ventilcharakteristik ein Überströmkennfeld ist. Weil das erfindungsgemäße Druckstellverfahren eine Überströmregelung zur Druckeinregelung ausführt, ist die Kenntnis des Überströmverhaltens und damit der Durchflusseigenschaften des Hydraulikventils eine wichtige Regelgröße. Da sich das druckabhängige Überströmverhalten aus dem Überströmkennfeld auslesen lässt, ergibt sich der Vorteil, dass die Druckaufbau- und die Druckabbaugeschwindigkeiten bestimmbar sind und die Regelung dementsprechend präziser vorgenommen werden kann.

Besonders bevorzugt ist es vorgesehen, dass das Überströmkennfeld ein Überströmverhalten eines eigenschaftsgemittelten Hydraulikventils darstellt. Daraus ergibt sich der Vorteil, dass nicht jedes einzelne Hydraulikventil aufwändig individuell vermessen werden muss. Vielmehr wird aus einer bestimmten Anzahl exemplarisch vermessener Hydraulikventile ein mittleres Verhalten für alle Hydraulikventil einer Produktionscharge bestimmt. Somit bleiben der zusätzliche Messaufwand und damit die zusätzlichen Kosten vergleichsweise gering.

In einer vorteilhaften Ausführungsform der Erfindung ist es vorgesehen, dass das Überströmkennfeld mittels der bekannten Ansteuerkennlinie ventilindividuell modifiziert wird. Da die Ansteuerkennlinie bereits eine Aussage über das charakteristische Ventilverhalten erlaubt, ist es anhand der Ansteuerkennlinie möglich, das gemittelte Überströmkennfeld in Abhängigkeit der Ansteuerkennlinie zu modifizieren.

In einer weiteren bevorzugten Ausführungsform ist es vorgesehen, dass die bekannte Ansteuerkennlinie eine ventilindividuelle Ansteuerkennlinie ist. Indem eine ventilindividuelle Ansteuerkennlinie zur Ventilregelung genutzt wird, ergibt sich zum einen der Vorteil, dass sowohl der individuelle Öffnungs- und Schließpunkt jedes Hydraulikventils genau bekannt ist. Dies verbessert die Genauigkeit der Druckregelung. Zum anderen kann das Überströmkennfeld mittels der individuellen Ansteuerkennlinie individuell modifiziert werden, so dass auch ein im Wesentlichen individuelles Überströmkennfeld zur Verfügung steht, ohne dass dieses ventilindividuell ausgemessen werden muss. Somit wird jedem einzelnen Hydraulikventil ein individuell modifiziertes Überströmkennfeld zugeordnet, was eine weiter verbesserte Druckregelung erlaubt.

Zweckmäßigerweise ist es vorgesehen, dass die bekannte Ansteuerkennlinie nach dem Einfügen des Hydraulikventils in eine hydraulische oder elektrohydraulische Fahrzeugbremsanlage bestimmt wird. Dies ist besonders einfach und präzise dadurch möglich, dass die Fahrzeugbremsanlage am Ende des Herstellungsprozesses in einem Prüfstand ausgemessen wird.

Aufwändige Kalibrierverfahren, die später während des Betriebs der Fahrzeugbremsanlage durchgeführt werden müssten und zu einer Unterbrechung oder Störung des Betriebs führen würden, entfallen somit.

Außerdem ist es vorteilhaft, dass die bekannte Ansteuerkennlinie während des Betriebs wiederholt bestimmt und/oder korrigiert wird. Da sich die Ventileigenschaften im Lauf der Lebensdauer des Ventils verändern können, ergibt sich durch wiederholtes Neubestimmen oder Korrigieren der Ansteuerkennlinie der Vorteil, dass der Öffnungs- bzw. Schließpunkt des Hydraulikventils stets im Wesentlichen exakt bekannt sind. Um den Betrieb der Fahrzeugbremsanlage durch die Neubestimmung und/oder Korrektur nicht unnötig zu stören, kann die Neubestimmung und/oder Korrektur beispielsweise bei abgeschalteter Zündung im Fahrzeugstillstand durchgeführt werden.

Gemäß einer weiteren bevorzugten Ausführungsform der Erfindung ist es vorgesehen, dass die bekannte Ansteuerkennlinie einen Öffnungsstrom gegen eine am Hydraulikventil anliegende Druckdifferenz darstellt. Somit ist der Zusammenhang zwischen dem zum Öffnen des Hydraulikventils benötigten Strom und der am Hydraulikventil anliegenden Druckdifferenz bekannt, wodurch ein im Wesentlichen exaktes Ansteuern des Hydraulikventils bei jeder Druckdifferenz ermöglicht wird.

Außerdem ist es vorteilhaft, dass das analog regelnde Hydraulikventil ein in Grundstellung geöffnetes Ventil ist. Durch die Auslegung des analog regelnden Hydraulikventils als in Grundstellung geöffnetes Ventil bleibt die Ansprechbarkeit der Fahrzeugbremsanlage im Falle eines Ausfalls der elektrischen Steuer- und Regelfunktionen erhalten, da der Fahrer weiterhin mittels Betätigung des Bremspedals einen Druckaufbau im Bremszylinder bewirken kann.

Weiterhin ist es bevorzugt, dass das analog regelnde Hydraulikventil, unter dessen Verwendung die Überströmregelung erfolgt, ein Trennventil eines hydraulischen oder elektrohydraulischen Bremsensystems ist. Das Trennventil eignet sich für die Überströmregelung besonders gut, da im Rahmen der Überströmregelung abgeströmtes Hydraulikfluid somit direkt zum Hauptzylinder zurückgeführt wird. Ein unnötiges Befüllen des Niederdruckspeichers wird vermieden.

In einer weiteren bevorzugten Ausführungsform der Erfindung ist es vorgesehen, dass das Überströmkennfeld einen Regelstrom gegen einen Hydraulikfluidvolumenstrom in Abhängigkeit einer am Hydraulikventil anliegenden Druckdifferenz darstellt. Daraus ergibt sich der Vorteil, dass durch den Hydraulikfluidvolumenstrom das tatsächliche, druckabhängige Überströmverhalten bekannt ist und nicht ausschließlich die Öffnungs- bzw. Schließpunkte des Hydraulikventils. Da der Hydraulikfluidvolumenstrom ein maßgeblicher Faktor für die Druckaufbau- und Druckabbaugeschwindigkeiten ist, ist erst mit seiner Kenntnis eine im Wesentlichen exakte Überströmregelung möglich.

Das erfindungsgemäße Verfahren zeichnet sich dadurch aus, dass eine quantitative Modifizierung des Überströmkennfelds mit dem Wert der Abweichung des bei einer Druckdifferenz von im Wesentlichen 0 bar ventilindividuell bestimmten Öffnungsstroms zum Öffnungsstrom eines eigenschaftsgemittelten Hydraulikventils steigt oder mit dem Wert der Abweichung des bei einer Druckdifferenz von im Wesentlichen 0 bar ventilindividuell bestimmten Schließstroms zum Schließstrom eines eigenschaftsgemittelten Hydraulikventils steigt. Daraus ergibt sich der Vorteil, dass das Überströmkennfeld nicht aufwändig ventilindividuell ausgemessen werden muss, da ein einfacher quantitativer Zusammenhang mit der ventilindividuell bekannten Ansteuerkennlinie genutzt wird.

Besonders bevorzugt zeichnet sich das erfindungsgemäße Verfahren dadurch aus, dass ein bei einer am Hydraulikventil anliegenden Druckdifferenz von im Wesentlichen 0 bar ventilindividuell bestimmter Schließstrom, welcher kleiner ist als ein bei einer an einem eigenschaftsgemittelten Hydraulikventil anliegenden Druckdifferenz von im Wesentlichen 0 bar bestimmter Schließstrom, zu einer Modifizierung im Sinne einer Reduzierung des Regelstroms gegen den Hydraulikfluidvolumenstrom im Überströmkennfeld führt. Daraus ergibt sich der Vorteil, dass der aus der Ansteuerkennlinie bekannte Umstand, dass ein Hydraulikventil im Rahmen einer Überströmregelung vergleichsweise zu wenig Hydraulikfluid abströmen lässt, auf einfache Weise dazu genutzt werden kann, den Hydraulikfluidvolumenstrom bei einem bestimmten Regelstrom zu erhöhen. Somit wird der regelstromabhängige Hydraulikfluidvolumenstrom des Hydraulikventils an dessen individuelle Charakteristik angepasst. Sofern es sich um ein stromlos geschlossenes Hydraulikventil handelt, wird die Modifizierung des Regelstroms entsprechend dem individuellen Öffnungsstrom des Hydraulikventils vorgenommen.

Weiterhin ist es besonders bevorzugt, dass ein bei einer am Hydraulikventil anliegenden Druckdifferenz von im Wesentlichen 0 bar ventilindividuell bestimmter Schließstrom, welcher größer ist als ein bei einer an einem eigenschaftsgemittelten Hydraulikventil anliegenden Druckdifferenz von im Wesentlichen 0 bar bestimmter Schließstrom, zu einer Modifizierung im Sinne einer Erhöhung des Regelstroms gegen den Hydraulikfluidvolumenstrom im Überströmkennfeld führt. Daraus ergibt sich in diesem Fall der Vorteil, dass ein Hydraulikventil, welches im Rahmen einer Überströmregelung vergleichsweise zu viel Hydraulikfluid abströmen lässt, eine diesen Umstand ausgleichende Modifizierung seines Überströmkennfelds erfährt. Somit wird auch hier der regelstromabhängige Hydraulikfluidvolumenstrom des Hydraulikventils an dessen individuelle Charakteristik angepasst. Bei einem stromlos geschlossenen Hydraulikventil wird eine analoge Modifizierung des Regelstroms entsprechend dem individuellen Öffnungsstrom des Hydraulikventils vorgenommen.

Weiterhin ist es vorteilhaft, dass die bekannte Ansteuerkennline mittels eines pneumatischen Kalibrationsverfahrens ermittelt wird. Dies erlaubt eine einfache und schnelle Ermittlung der Ansteuerkennlinie, ohne dass das zu kalibrierende System mit Hydraulikfluid befüllt werden muss.

Des Weiteren ist es bevorzugt, dass die bekannte Ansteuerkennline mittels eines Ventilstößelpositionserfassungsverfahrens ermittelt wird. Ein an sich bekanntes Ventilstößelpositionserfassungsverfahrens bietet dabei den Vorteil, dass das Hydraulikventil jederzeit, auch nach Einbau in die Fahrzeugbremsanlage, auf einfache Art hydraulisch oder pneumatisch ausgemessen werden kann.

Außerdem ist es zweckmäßig, dass das analog regelnde Hydraulikventil mittels eines pulsweitenmodulierten Stroms gesteuert und/oder geregelt wird. Mittels Pulsweitenmodulation kann über das Verhältnis der Ein-Phasen zu den Aus-Phasen auf einfache Weise ein mittlerer Stromwert eingestellt werden. Somit werden die analoge Ansteuerung und die Einregelung von Zwischenstellungen des Ventils möglich, was insgesamt zu einer feinfühligen Druckregelung führt.

In einer weiteren bevorzugten Ausführungsform der Erfindung ist es vorgesehen, dass das Verfahren in einem Bremsstrang einer hydraulischen oder elektrohydraulischen Fahrzeugbremsanlage ausgeführt wird. Aufgrund der immer komplexer werdenden Fahrerassistenzsysteme sowie der zunehmend feinfühligen Steuer- und Regelanforderungen in Fahrzeugbremsanlagen ist eine möglichst exakte Druckstellgenauigkeit, wie sie das erfindungsgemäße Verfahren erlaubt, hier von großem Nutzen.

Zusätzlich ist es vorgesehen, dass die Fahrzeugbremsanlage weiterhin mindestens ein Einlassventil, mindestens ein Auslassventil, mindestens einen Niederdruckspeicher, mindestens einen einer Fahrzeugbremse zugeordneten Radbremszylinder, mindestens einen Hauptzylinder und mindestens einen Drucksensor umfasst. Diese Vorrichtungen sind typischerweise feste Bestandteile einer hydraulischen oder elektrohydraulischen Fahrzeugbremsanlage. Somit kann das erfindungsgemäße Verfahren vorteilhafterweise in allen gängigen Fahrzeugbremsanlagen Anwendung finden.

Die vorliegende Erfindung betrifft weiter eine hydraulische oder elektrohydraulische Fahrzeugbremsanlage, welche insbesondere das erfindungsgemäße Verfahren ausführt. Die hydraulische oder elektrohydraulische Fahrzeugbremsanlage umfasst mindestens einen Hauptzylinder zur Hydraulikfluidbevorratung, mindestens ein Einlassventil zum Einlassen eines Drucks in mindestens einen einer Fahrzeugbremse zugeordneten Radbremszylinder und mindestens ein Auslassventil zum Auslassen des Drucks aus dem mindestens einen einer Fahrzeugbremse zugeordneten Radbremszylinder. Des Weiteren umfasst die erfindungsgemäße Fahrzeugbremsanlage mindestens eine Hydraulikpumpe, mindestens eine elektronische Steuer- und Regeleinheit und mindestens ein analog regelndes Trennventilwobei die Hydraulikpumpe einen hydraulischen Druck gemäß einer Druckanforderung der elektronischen Steuer- und Regeleinheit aufbaut und die elektronische Steuer- und Regeleinheit mittels des Trennventils und einer gespeicherten Ansteuerkennlinie des Trennventils eine Überströmregelung ausführt, welche einem von der Hydraulikpumpe erzeugten, über die Druckanforderung hinausgehenden Druckaufbau entgegenwirkt. Die hydraulische oder elektrohydraulische Fahrzeugbremsanlage zeichnet sich dadurch aus, dass die elektronische Steuer- und Regeleinheit zusätzlich zu der bekannten Ansteuerkennlinie des analog regelnden Hydraulikventils eine weitere Ventilcharakteristik zur Überströmregelung berücksichtigt. Dadurch ergeben sich die bereits beschriebenen Vorteile hinsichtlich einer verbesserten Druckregelung.

Zweckmäßigerweise ist es vorgesehen, dass die elektronische Steuer- und Regeleinheit als weitere Ventilcharakteristik des analog regelnden Hydraulikventils ein gespeichertes Überströmkennfeld zur Überströmregelung berücksichtigt. Somit sind die Durchflusseigenschaften und damit die Druckaufbau- und die Druckabbaugeschwindigkeiten bekannt, was eine präzisere Druckregelung ermöglicht.

Weiterhin ist es zweckmäßig, dass die elektronische Steuer- und Regeleinheit das gespeicherte Überströmkennfeld in Abhängigkeit der gespeicherten Ansteuerkennlinie ventilindividuell modifiziert. Die erlaubt eine individuell angepasste und somit weitestgehend optimale Überströmregelung des Hydraulikventils.

Bevorzugt ist es vorgesehen, dass die elektronische Steuer- und Regeleinheit die Überströmregelung mittels des Trennventils ausführt. Wie bereits beschrieben, eignet sich das Trennventil für die Überströmregelung besonders gut, da im Rahmen der Überströmregelung abgelassenes Hydraulikfluid direkt zum Hauptzylinder zurückgeführt werden kann, was ein unnötiges Befüllen des Niederdruckspeichers vermeidet.

Weiterhin ist es bevorzugt, dass die elektronische Steuer- und Regeleinheit die gespeicherte Ansteuerkennlinie des Trennventils während des Betriebs wiederholt bestimmt und/oder korrigiert. Somit können im Lauf der Lebensdauer auftretende Veränderungen der Ventileigenschaften ausgeglichen werden. Die Verwendung von Drucksensorinformationen bietet weiterhin den Vorteil, dass für die Neubestimmung und/oder Korrektur der Ansteuerkennlinie im Wesentlichen exakte Messdaten vorliegen, welche das Ventilverhalten charakterisieren.

In einer weiteren bevorzugten Ausführungsform ist es vorgesehen, dass das elektronische Trennventil ein in Grundstellung geöffnetes Ventil ist. Dadurch behält der Fahrer im Falle eines Ausfalls der elektrischen Steuer- und Regelfunktionen die Möglichkeit, durch Betätigung des Bremspedals in den Bremszylindern wie gewohnt einen Bremsdruck aufzubauen.

Die Erfindung betrifft weiterhin eine Verwendung des erfindungsgemäßen Druckstellverfahrens zur Vermeidung von Druckpulsationen in einem Abstands- und Geschwindigkeitsregelungssystems eines Kraftfahrzeugs.

Weitere bevorzugte Ausführungsformen ergeben sich aus den Unteransprüchen und der nachfolgenden Beschreibung eines Ausführungsbeispiels an Hand von Figuren.

Es zeigt
- Fig. 1: Ansteuerkennlinien dreier Hydraulikventile mit unterschiedlichem Verhalten,
- Fig. 2: ein Überströmkennfeld eines eigenschaftsgemittelten Hydraulikventils mit einer ventilindividuellen Modifizierung bei geringen Drücken und
- Fig. 3: einen Zusammenhang zwischen der ventilindividuellen Modifizierung eines Überströmkennfeld eines eigenschaftsgemittelten Hydraulikventils und der ventilindividuellen Ansteuerkennlinie eines Hydraulikventils.

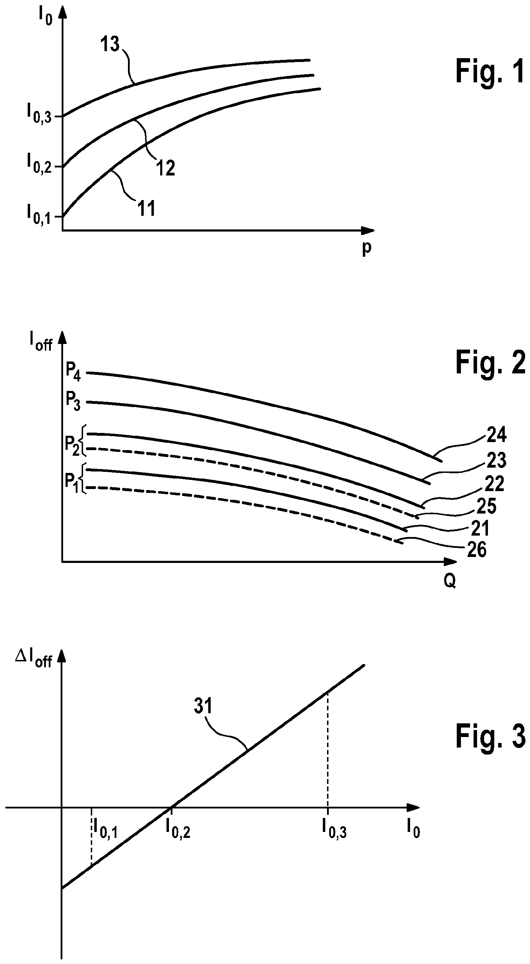

In Fig. 1 ist beispielhaft der Schließstrom I₀ gegen eine an einem Hydraulikventil anliegende Druckdifferenz p für drei unterschiedliche, individuelle Hydraulikventile (nicht dargestellt) dargestellt. Kennlinien 11, 12 und 13 sind die ventilindividuellen Ansteuerkennlinien der drei Hydraulikventile und wurden mittels eines Ventilstößelpositionserfassungsverfahrens direkt nach dem Einfügen der Hydraulikventile in eine hydraulische oder elektrohydraulische Fahrzeugbremsanlge ermittelt. Kennlinie 11 weist bei einer anliegenden Druckdifferenz p = 0 den niedrigsten Schließstrom I_{0,1} auf, Kennlinie 12 weist bei p = 0 einen durchschnittlichen Schließstrom I_{0,2} > I_{0,1} auf und Kennlinie 13 weist bei p = 0 einen überdurchschnittlich großen Schließstrom I_{0,3} > I_{0,2} auf. Mit steigender Druckdifferenz p zwischen Ventileinlass und Ventilauslass gleicht sich das Verhalten der drei Hydraulikventile zunehmend aneinander an. Über ventilindividuelle Ansteuerkennlinien 11, 12 und 13 sind die druckabhängigen Öffnungs- und Schließpunkte der drei Hydraulikventile bekannt. Ventilindividuelle Ansteuerkennlinien 11, 12 und 13 erlauben außerdem Aussagen über das ventilindividuelle Überströmverhalten der zugehörigen Hydraulikventile.

Fig. 2 zeigt beispielhaft ein Überströmkennfeld eines eigenschaftsgemittelten Hydraulikventils (nicht dargestellt), bestehend aus Graphen 21, 22, 23 und 24. Zu sehen ist der druckabhängige Hydraulikfluidvolumenstrom Q in Abhängigkeit eines druckabhängig gewählten Offset-Stroms I_{off}, mit welchem der Regelstrom I_{R} richtungsgleich beaufschlagt wird, bei unterschiedlichen Druckdifferenzen p₁ < p₂ < p₃ < p₄. Dem Überströmkennfeld ist zu entnehmen, dass bei großen Druckdifferenzen ein größerer Offset-Strom I_{off} zum Erzielen eines bestimmten Hydraulikfluidvolumenstroms Q notwendig ist als bei geringen Drücken. Da Graphen 21, 22, 23 und 24 das Überströmverhalten eines eigenschaftgemittelten, also durchschnittlichen Hydraulikventils widerspiegeln, entsprechen sie dem Verhalten des durch Ansteuerkennlinie 12 in Fig. 1 charakterisierten Hydraulikventils. Um bei abweichenden Ventileigenschaften das Abströmen eines zu großen oder zu geringen Hydraulikfluidvolumenstroms Q durch das Hydraulikventil zu vermeiden, wird das Überströmkennfeld in Abhängigkeit von den in Fig. 1 beispielhaft gezeigten Ansteuerkennlinien ventilindividuell modifiziert. Gestrichelte Graphen 25 und 26 zeigen eine derartig individuelle Modifizierung für ein Hydraulikventil mit vergleichsweise geringem Schließstrom I₀, wie z.B. von Ansteuerkennlinie 11 in Fig. 1 dargestellt. Da ein Hydraulikventil mit einer Ansteuerkennlinie 11 (Fig. 1) und einem Schließstrom I_{0,1} (Fig. 1) im Rahmen einer unmodifizierten Überströmregelung eine zu geringe Menge Hydraulikfluid abströmen lassen würde, wird das Überströmkennfeld für ein derartiges Hydraulikventil folglich dahingehend modifiziert, dass Graphen 21 und 22 zu niedrigeren Offset-Strömen I_{off} verschoben werden. Diese Modifizierung führt beispielsgemäß zu einer Überströmregelung des Hydraulikventils gemäß gestrichelt dargestellter Graphen 25 und 26 bei Drücken p₁ und p₂. Aufgrund des bei großen Drücken zunehmend ähnlichen Verhaltens auch unterschiedlicher Hydraulikventile, ist eine Modifizierung bei großen Drücken (p₃, p₄) in diesem Ausführungsbeispiel nicht notwendig. Graphen 23 und 24 müssen für eine präzise Regelung somit nicht modifiziert werden.

Fig. 3 zeigt beispielhaft den Zusammenhang zwischen der Modifizierung des Überströmkennfelds und dem ermittelten Öffnungsstrom I₀ eines Hydraulikventils bei einer Druckdifferenz p = 0 in Form eines linearen Zusammenhangs 31. ΔI_{off} gibt die quantitative Modifizierung des Offset-Stroms I_{off} in Abhängigkeit des Schließstroms I₀ bei einer Druckdifferenz p = 0 an. In diesem Ausführungsbeispiel entspricht der Schließstrom I_{0,2} einem durchschnittlichen und eigenschaftsgemittelten Hydraulikventil. Der Schließstrom I_{0,3} entspricht dem Schließstrom eines Hydraulikventils, dessen Schließstrom I₀ überdurchschnittlich groß ist. Je größer der Schließstrom I₀ eines Hydraulikventils ist, desto stärker wird das Überströmkennfeld, nach dem das Hydraulikventil geregelt wird, zu größeren Offset-Strömen I_{off} hin modifiziert. Im Gegensatz dazu stellt der Schließstrom I_{0,1} einen unterdurchschnittlichen Schließstrom I₀ dar, was zu einer Absenkung des entsprechenden, druckabhängigen Offset-Stroms I_{off} des Hydraulikventils im genutzten Überströmkennfeld führt. Somit wird in diesem Ausführungsbeispiel ein linearer Zusammenhang zwischen der ventilindividuellen, quantitativen Modifizierung des Überströmkennfelds und dem ventilindividuellen Schließstrom I₀ bei einer Druckdifferenz von p = 0 genutzt.

## Patentansprüche

1. Verfahren zur Optimierung der Druckstellgenauigkeit, wobei mittels einer Hydraulikpumpe ein hydraulischer Druck entsprechend einer Druckanforderung aufgebaut wird und wobei unter Verwendung eines analog regelnden Hydraulikventils und einer bekannten Ansteuerkennlinie des analog regelnden Hydraulikventils eine Überströmregelung erfolgt, welche einem von der Hydraulikpumpe erzeugten, über die Druckanforderung hinausgehenden Druckaufbau entgegenwirkt, **dadurch gekennzeichnet, dass**
zusätzlich zu der bekannten Ansteuerkennlinie des analog regelnden Hydraulikventils mindestens eine weitere Ventilcharakteristik zur Überströmregelung berücksichtigt wird und dass eine quantitative Modifizierung des Überströmkennfelds mit dem Wert der Abweichung des bei einer Druckdifferenz von im Wesentlichen 0 bar ventilindividuell bestimmten Öffnungsstroms zum Öffnungsstrom eines eigenschaftsgemittelten Hydraulikventils steigt oder mit dem Wert der Abweichung des bei einer Druckdifferenz von im Wesentlichen 0 bar ventilindividuell bestimmten Schließstroms zum Schließstrom eines eigenschaftsgemittelten Hydraulikventils steigt.

2. Verfahren nach Anspruch 1, **dadurch gekennzeichnet, dass** die mindestens eine weitere Ventilcharakteristik ein Überströmkennfeld ist.

3. Verfahren nach Anspruch 2, **dadurch gekennzeichnet, dass** das Überströmkennfeld ein Überströmverhalten eines eigenschaftsgemittelten Hydraulikventils darstellt.

4. Verfahren nach mindestens einem der Ansprüche 2 und 3, **dadurch gekennzeichnet, dass** das Überströmkennfeld mittels der bekannten Ansteuerkennlinie ventilindividuell modifiziert wird.

5. Verfahren nach mindestens einem der Ansprüche 1 bis 4, **dadurch gekennzeichnet,**
**dass** die bekannte Ansteuerkennlinie eine ventilindividuelle Ansteuerkennlinie ist.

6. Verfahren nach mindestens einem der Ansprüche 1 bis 5, **dadurch gekennzeichnet,**
**dass** die bekannte Ansteuerkennlinie nach dem Einfügen des Hydraulikventils in eine hydraulische oder elektrohydraulische Fahrzeugbremsanlage bestimmt wird.

7. Verfahren nach mindestens einem der Ansprüche 1 bis 6, **dadurch gekennzeichnet,**
**dass** das analog regelnde Hydraulikventil, unter dessen Verwendung die Überströmregelung erfolgt, ein Trennventil eines hydraulischen oder elektrohydraulischen Bremsensystems ist.

8. Verfahren nach mindestens einem der Ansprüche 1 bis 7, **dadurch gekennzeichnet, dass**
das Überströmkennfeld einen Regelstrom gegen einen Hydraulikfluidvolumenstrom in Abhängigkeit einer am Hydraulikventil anliegenden Druckdifferenz darstellt.

9. Verfahren nach mindestens einem der Ansprüche 1 bis 8, **dadurch gekennzeichnet,**
**dass** ein bei einer am Hydraulikventil anliegenden Druckdifferenz von im Wesentlichen 0 bar ventilindividuell bestimmter Schließstrom, welcher kleiner ist als ein bei einer an einem eigenschaftsgemittelten Hydraulikventil anliegenden Druckdifferenz von im Wesentlichen 0 bar bestimmter Schließstrom, zu einer Modifizierung im Sinne einer Reduzierung des Regelstroms gegen den Hydraulikfluidvolumenstrom im Überströmkennfeld führt.

10. Verfahren mindestens einem der Ansprüche 1 bis 8, **dadurch gekennzeichnet,**
**dass** ein bei einer am Hydraulikventil anliegenden Druckdifferenz von im Wesentlichen 0 bar ventilindividuell bestimmter Schließstrom, welcher größer ist als ein bei einer an einem eigenschaftsgemittelten Hydraulikventil anliegenden Druckdifferenz von im Wesentlichen 0 bar bestimmter Schließstrom, zu einer Modifizierung im Sinne einer Erhöhung des Regelstroms gegen den Hydraulikfluidvolumenstrom im Überströmkennfeld führt.

11. Verfahren nach mindestens einem der Ansprüche 1 bis 10, **dadurch gekennzeichnet, dass**
die bekannte Ansteuerkennline mittels eines Ventilstößelpositionserfassungsverfahrens ermittelt wird.

12. Hydraulische oder elektrohydraulische Fahrzeugbremsanlage, welche ein Verfahren nach mindestens einem der Ansprüche 1 bis 11 ausführt,
umfassend mindestens einen Hauptzylinder zur Hydraulikfluidbevorratung, mindestens ein Einlassventil zum Einlassen eines Drucks in mindestens einen einer Fahrzeugbremse zugeordneten Radbremszylinder und mindestens ein Auslassventil zum Auslassen des Drucks aus dem mindestens einen einer Fahrzeugbremse zugeordneten Radbremszylinder,
des Weiteren umfassend mindestens eine Hydraulikpumpe, mindestens eine elektronische Steuer- und Regeleinheit und mindestens ein analog regelndes Trennventil,
wobei die Hydraulikpumpe einen hydraulischen Druck gemäß einer Druckanforderung der elektronischen Steuer- und Regeleinheit aufbaut
und die elektronische Steuer- und Regeleinheit mittels des Trennventils und einer gespeicherten Ansteuerkennlinie des Trennventils
eine Überströmregelung ausführt, welche einen von der Hydraulikpumpe erzeugten, über die Druckanforderung hinausgehenden Druckaufbau Druckpulsationen entgegenwirkt, **dadurch gekennzeichnet,**
**dass** die elektronische Steuer- und Regeleinheit zusätzlich zu der gespeicherten Ansteuerkennlinie des Trennventils eine weitere Ventilcharakteristik des Trennventils zur Überströmregelung berücksichtigt.

13. Verwendung des Verfahrens nach mindestens einem der Ansprüche 1 bis 11 zur Druckregelung in einem Abstands- und Geschwindigkeitsregelungssystems eines Kraftfahrzeugs.

## Claims

1. Method for optimizing the pressure setting accuracy, wherein a hydraulic pressure is built up by means of a hydraulic pump in accordance with a pressure demand and wherein, using an analog-regulation hydraulic valve and a known actuation characteristic curve of the analog-regulation hydraulic valve, overflow regulation is performed which counteracts a pressure build-up, generated by the hydraulic pump, which goes beyond the pressure demand, **characterized in that**,
in addition to the known actuation characteristic curve of the analog-regulation hydraulic valve, at least one further valve characteristic is taken into consideration for the overflow regulation and **in that** a quantitative modification of the overflow characteristic map increases with the value of the deviation of the opening current determined on a valve-specific basis in the case of a pressure difference of substantially 0 bar from the opening current of a hydraulic valve of averaged characteristics, or increases with the value of the deviation of the closing current determined on a valve-specific basis in the case of a pressure difference of substantially 0 bar from the closing current of a hydraulic valve of averaged characteristics.

2. Method according to Claim 1, **characterized in that** the at least one further valve characteristic is an overflow characteristic map.

3. Method according to Claim 2, **characterized in that** the overflow characteristic map represents an overflow behavior of a hydraulic valve of averaged characteristics.

4. Method according to at least one of Claims 2 and 3,
**characterized in that** the overflow characteristic map is modified on a valve-specific basis by means of the known actuation characteristic curve.

5. Method according to at least one of Claims 1 to 4,
**characterized**
**in that** the known actuation characteristic curve is a valve-specific actuation characteristic curve.

6. Method according to at least one of Claims 1 to 5,
**characterized**
**in that** the known actuation characteristic curve is determined after the connection of the hydraulic valve into a hydraulic or electrohydraulic vehicle brake system.

7. Method according to at least one of Claims 1 to 6,
**characterized in that** the analog-regulation hydraulic valve which is used to perform the overflow regulation is a cut-off valve of a hydraulic or electrohydraulic brake system.

8. Method according to at least one of Claims 1 to 7,
**characterized in that**
the overflow characteristic map represents a regulation current versus a hydraulic fluid volume flow rate as a function of a pressure difference prevailing across the hydraulic valve.

9. Method according to at least one of Claims 1 to 8,
**characterized**
**in that**, if a closing current determined on a valve-specific basis in the case of a pressure difference of substantially 0 bar prevailing across the hydraulic valve is less than a closing current determined in the case of a pressure difference of substantially 0 bar prevailing across a hydraulic valve of averaged characteristics, a modification is performed for a reduction of the regulating current versus the hydraulic fluid volume flow rate in the overflow characteristic map.

10. Method according to at least one of Claims 1 to 8,
**characterized**
**in that**, if a closing current determined on a valve-specific basis in the case of a pressure difference of substantially 0 bar prevailing across the hydraulic valve is greater than a closing current determined in the case of a pressure difference of substantially 0 bar prevailing across a hydraulic valve of averaged characteristics, a modification is performed for an increase of the regulation current versus the hydraulic fluid volume flow rate in the overflow characteristic map.

11. Method according to at least one of Claims 1 to 10,
**characterized in that**
the known actuation characteristic curve is determined by means of a valve plunger position detection method.

12. Hydraulic or electrohydraulic vehicle brake system, which performs a method according to at least one of Claims 1 to 11,
comprising at least one master cylinder for the supply of hydraulic fluid, at least one inlet valve for the admission of a pressure into at least one wheel brake cylinder assigned to a vehicle brake and at least one outlet valve for the release of the pressure from the at least one wheel brake cylinder assigned to a vehicle brake,
also comprising at least one hydraulic pump, at least one electronic control and regulation unit and at least one analog-regulation cut-off valve,
wherein the hydraulic pump builds up a hydraulic pressure in accordance with a pressure demand from the electronic control and regulation unit,
and the electronic control and regulation unit, using the cut-off valve and a stored actuation characteristic curve of the cut-off valve, performs overflow regulation which counteracts a pressure build-up, generated by the hydraulic pump, which goes beyond the pressure demand,
**characterized**
**in that**, for the overflow regulation, the electronic control and regulation unit takes into consideration not only the stored actuation characteristic curve of the cut-off valve but also one further valve characteristic of the cut-off valve.

13. Use of the method according to at least one of Claims 1 to 11 for pressure regulation in a system for inter-vehicle distance regulation and speed regulation of a motor vehicle.

## Revendications

1. Procédé d'optimisation de la précision de réglage de la pression, dans lequel on crée au moyen d'une pompe hydraulique une pression hydraulique correspondant à une demande de pression et dans lequel on effectue, par utilisation d'une soupape hydraulique à régulation analogique et d'une courbe caractéristique de commande connue de la soupape hydraulique à régulation analogique, une régulation de trop-plein qui s'oppose à une hausse de pression produite par la pompe hydraulique et excédant la demande de pression, **caractérisé en ce qu'**en plus de la courbe caractéristique de commande connue de la soupape hydraulique à régulation analogique, on tient compte d'au moins une autre caractéristique de soupape pour la régulation de trop-plein et **en ce qu'**une modification quantitative du diagramme caractéristique de trop-plein augmente avec la valeur de l'écart du courant d'ouverture déterminé individuellement par soupape pour une différence de pression essentiellement de zéro bar par rapport au courant d'ouverture d'une soupape hydraulique à propriétés moyennes ou augmente avec la valeur de l'écart du courant de fermeture déterminé individuellement par soupape pour une différence de pression essentiellement de zéro bar par rapport au courant de fermeture d'une soupape hydraulique à propriétés moyennes.

2. Procédé selon la revendication 1, **caractérisé en ce que** ladite au moins une autre caractéristique de soupape est un diagramme caractéristique de trop-plein.

3. Procédé selon la revendication 2, **caractérisé en ce que** le diagramme caractéristique de trop-plein représente un comportement de trop-plein d'une soupape hydraulique à propriétés moyennes.

4. Procédé selon au moins une des revendications 2 et 3, **caractérisé en ce que** l'on modifie individuellement par soupape le diagramme caractéristique de trop-plein au moyen de la courbe caractéristique de commande connue.

5. Procédé selon au moins une des revendications 1 à 4, **caractérisé en ce que** la courbe caractéristique de commande connue est une courbe caractéristique de commande individuelle par soupape.

6. Procédé selon au moins une des revendications 1 à 5, **caractérisé en ce que** l'on détermine la courbe caractéristique de commande connue après l'introduction de la soupape hydraulique dans une installation hydraulique ou électrohydraulique de freinage de véhicule.

7. Procédé selon au moins une des revendications 1 à 6, **caractérisé en ce que** la soupape hydraulique à régulation analogique, par l'utilisation de laquelle on effectue la régulation de trop-plein, est une soupape de séparation d'un système de freinage hydraulique ou électrohydraulique.

8. Procédé selon au moins une des revendications 1 à 7, **caractérisé en ce que** le diagramme caractéristique de trop-plein représente un courant de régulation par rapport à un courant volumique de fluide hydraulique en fonction d'une différence de pression appliquée à la soupape hydraulique.

9. Procédé selon au moins une des revendications 1 à 8, **caractérisé en ce qu'**un courant de fermeture déterminé individuellement par soupape pour une différence de pression essentiellement de zéro bar appliquée à la soupape hydraulique, qui est inférieur à un courant de fermeture déterminé pour une différence de pression essentiellement de zéro bar appliquée à une soupape hydraulique à propriétés moyennes, conduit à une modification dans le sens d'une réduction du courant de régulation par rapport au courant volumique de fluide hydraulique dans le diagramme caractéristique de trop-plein.

10. Procédé selon au moins une des revendications 1 à 8, **caractérisé en ce qu'**un courant de fermeture déterminé individuellement par soupape pour une différence de pression essentiellement de zéro bar appliquée à la soupape hydraulique, qui est supérieur à un courant de fermeture déterminé pour une différence de pression essentiellement de zéro bar appliquée à une soupape hydraulique à propriétés moyennes, conduit à une modification dans le sens d'une augmentation du courant de régulation par rapport au courant volumique de fluide hydraulique dans le diagramme caractéristique de trop-plein.

11. Procédé selon au moins une des revendications 1 à 10, **caractérisé en ce que** l'on détermine la courbe caractéristique de commande connue au moyen d'un procédé de détection de la position du poussoir de soupape.

12. Installation hydraulique ou électrohydraulique de freinage de véhicule, qui exécute un procédé selon au moins une des revendications 1 à 11,
comprenant au moins un maître-cylindre pour le stockage de fluide hydraulique, au moins une soupape d'admission pour l'admission d'une pression dans au moins un cylindre de frein de roue associé à un frein de véhicule et au moins une soupape d'échappement pour l'échappement de la pression hors dudit au moins un cylindre de frein de roue associé à un frein de véhicule,
comprenant en outre au moins une pompe hydraulique, au moins une unité de commande et de régulation électronique et au moins une soupape de séparation à régulation analogique,
dans laquelle la pompe hydraulique crée une pression hydraulique selon une demande de pression de l'unité de commande et de régulation électronique,
et l'unité de commande et de régulation électronique effectue, au moyen de la soupape de séparation et d'une courbe caractéristique de commande mémorisée de la soupape de séparation, une régulation de trop-plein, qui s'oppose à une hausse de pression et à des impulsions de pression produites par la pompe hydraulique et excédant la demande de pression, **caractérisé en ce que** l'unité de commande et de régulation électronique tient compte, en plus de la courbe caractéristique de commande mémorisée de la soupape de séparation, d'une autre caractéristique de soupape de la soupape de séparation, pour la régulation de trop-plein.

13. Utilisation du procédé selon au moins une des revendications 1 à 11 pour la régulation de pression dans un système de régulation de la distance et de la vitesse d'un véhicule automobile.
